# EUROPEAN PATENT SPECIFICATION

(11) **EP 2 797 791 B1**
(45) Date of publication and mention of the grant of the patent: **21.02.2018**
(21) Application number: 12846791.7
(22) Date of filing: 26.12.2012
(51) Int. Cl.: B60W 30/192, B60W 10/02, B60W 10/06, B60W 10/11

(54) **VEHICLE CONTROLLER**
FAHRZEUGSTEUERUNG
ORGANE DE COMMANDE DE VÉHICULE

(30) Priority: 28.12.2011 IN 4624CH2011
(43) Date of publication of application: 05.11.2014
(73) Proprietor: TVS Motor Company Limited, Chennai 600 006 (IN)
(72) Inventor: DHINAGAR, Samraj, Jabez, Chennai 600006 (IN); KOMMURI, Naga, Kavitha, Chennai 600006 (IN); DAS, Himadri, Bhushan, Chennai 600006 (IN); PADHI, Lakshminarayana, Chennai 600006 (IN)
(74) Representative: Patentanwaltskanzlei Matschnig & Forsthuber OG
(86) International application number: PCT/IN2012/000854
(87) International publication number: WO 2013/111156

(56) References cited:
- EP-A2- 1 403 754
- CA-A1- 2 550 528
- DE-A1-102004 060 007
- DE-A1-102006 004 038
- DE-A1-102007 041 568
- DE-A1-102008 041 454
- US-A1- 2001 016 918

## Description

### FIELD OF THE INVENTION

The present invention provides controlled shut down or partially shut down mode for automated manual transmission during vehicle unexpected switching off mode.

### BACKGROUND OF THE INVENTION

Generally in an automated manual transmission (AMT) vehicle, gear and clutch actuation is controlled by an electric control unit (ECU). The gear and clutch actuation is performed by two independent electric actuators. The position of the clutch and gear is sensed by two independent position sensors. These sensors are mechanically connected to the gear lever and clutch actuation system respectively. The desired position of the clutch and gear is calculated by the ECU based on information available from different input sensors. The system works with the vehicle power pack as an energy source. The power pack consists of vehicle battery, alternator, the regulator rectifier unit and any auxiliary power unit. The energy flow from the power pack to the AMT control unit with actuators is switched on by the ignition key. The AMT control unit is nonfunctional in case of switched off condition of the ignition key. The driver may switch off the ignition key unexpectedly when AMT control unit is functioning in certain condition and which is unique to 2- wheeler. Some of the conditions are mentioned herein, but there may exist more of such conditions - downhill driving with geared condition, traffic signal point with vehicle stationary, while parking the vehicle. In all of these situations, it is necessary for AMT unit to function in spite of switching off the ignition key. In the first condition it is necessary to switch off the engine but engine braking functionality should be active. So that gear position control should function during this case.

In the second condition, the gear position should travel to 1st gear position (from any gear position) with clutch disengage position so that when the driver starts the vehicle, the vehicle can move in 1st gear.

In the third condition , the gear position should travel to neutral gear position or 1st gear position with clutch disengage position so that during next starting condition, the vehicle is movable in case of any failure of battery or empty fuel tank or any other failure.

In CA 2550528 A1 a system for controlling power to a computing device is disclosed, wherein an operational state of a vehicle is detected, for instance the state of the ignition system, and the power level of the computing device is controlled based upon the operational state of the vehicle.

So it is necessary to provide a solution for providing alternate power to the AMT unit which is independent of ignition switch position. One solution can be providing continuous power to the AMT unit from the power pack irrespective of the ignition key position. The ignition key signal is used as signal input to the AMT control unit. But disadvantage of this approach is the continuous power consumption by the unit. This power consumption affects the on board limited energy source.

### SUMMARY

An object of the present invention is to provide a system which makes the vehicle (equipped with automated manual transmission) movable in case of unexpected ignition switching off.

Another object of the present invention is to provide an auxiliary "Keep alive" signal to have a controlled shut down mode Or Partially shut down mode.

Further scope of applicability of the present invention will become apparent from the detailed description given hereinafter. However, it should be understood that the detailed description and specific examples, while indicating preferred embodiments of the invention, are given by way of illustration. The scope is defined by the claims.

### BRIEF DESCRIPTION OF THE DRAWINGS

The present invention will become more fully understood from the detailed description given herein below and the accompanying drawings which are given by way of illustration only, and thus are not limitative of the present invention, and wherein
Figure 1 shows a conventional scooter type vehicle.
Figure 2 shows the first embodiment according to the present invention.
Figure 3 shows the flow chart according to the first embodiment of the present invention.
Figure 4 shows second embodiment according to the present invention.
Figure 5 shows third embodiment according to the present invention.
Figure 6 shows flow chart according to third embodiment of the present invention.

The present invention now will be described more fully hereinafter with different embodiments. This invention may, however, be embodied in many different forms and should not be construed as limited to the embodiments set forth herein; rather those embodiments are provided so that this disclosure will be thorough and complete, and fully convey the scope of the invention to those skilled in the art.

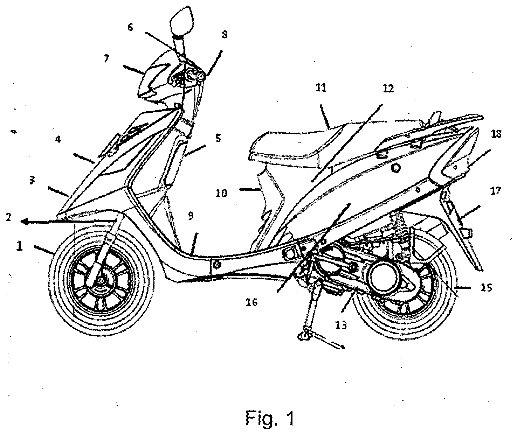

With reference to Figure 1,1 denotes a front wheel, 2 denotes a front fork, 3 denotes a front fender, 4 denotes a front cover, 5 denotes a leg shield made of resin or metal, 6 denotes a handle bar cover, 7 denotes a headlight, 8 denotes a handle bar ,17 denotes a rear fender and 18 denotes tail lamp.

The centre of the body forms a low floor board 9 for functioning as a part for putting feet and a under cowl 10 which is located below the rider's seat and covers at least a part of the engine, The under cowl is made up of metal or resin. The under cowl is hinged to the seat 11. A utility box 12 opens from the rear end to hinged portion. The utility box 12 is provided under the seat extending longitudinally of a vehicle body and the inside of the utility box has a large capacity so that a large article can be housed. A main frame 14 extended along the center of the body before and behind and made of a metallic pipe and is provided under the floor board 9. A swing type power unit 13 is coupled to the rear end of the main frame 14.

**A** rear wheel 15 is supported on one side of the rear end of the swing type power unit 13. The swing type power unit 13 is suspended in the rear of a body frame.

The side covers 16 both on left and right sides, covers the utility box 12 and other parts of the vehicle, thereby providing a good appearance to the vehicle.

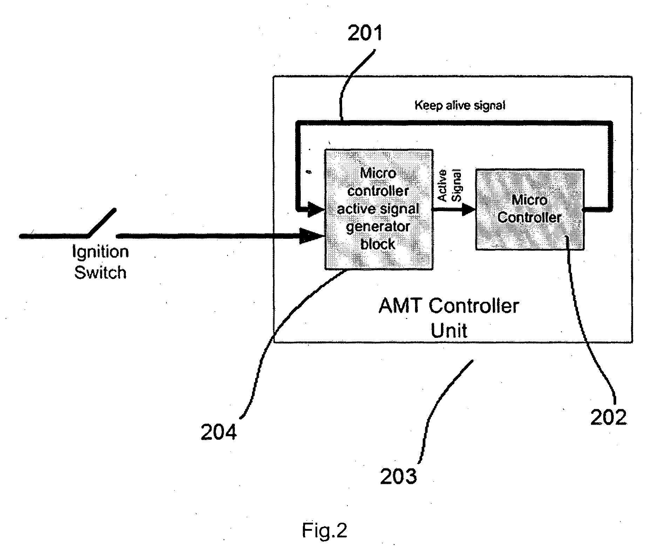

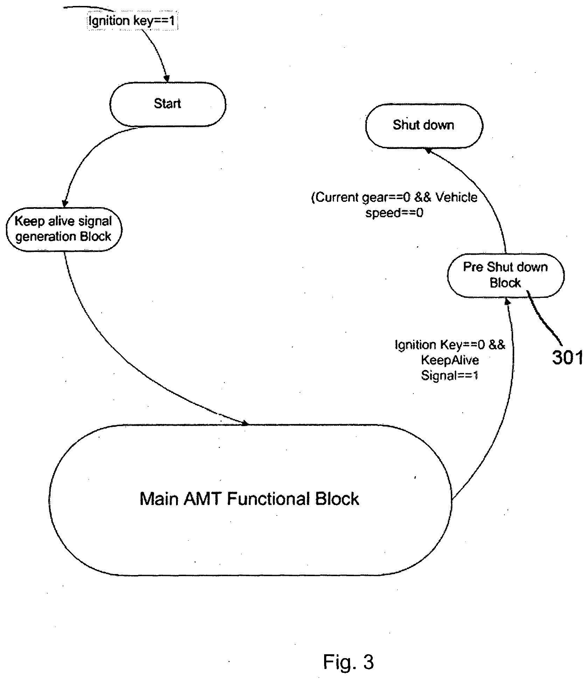

In the first embodiment, according to the present invention and referring to Figure 2, a keep-alive signal 201 is generated by the microcontroller 202 which is internal to the AMT control unit 203 . The "micro controller active generator block" 204 generates active signal for the microcontroller 202 in case of any of the two inputs is active. This unit can be implemented in hardware or with a separate micro controller which is in built to the AMT control unit 203. Once the ignition key switched on, this block generates an active signal in spite of having the keep-alive signal in active. Once micro controller 202 becomes active, the software state machine will follow structure mentioned in Figure 3. The "keep alive signal generator" state generates the 2nd input signal for "micro controller active generator block". In case of the un expected ignition key switched off condition, the keep-alive signal will keep the active signal high which will prevent the micro controller to enter to shut down. The software state machine enters to a state defined as "Pre Shut down Block" 301 In this state certain functions are executed depending on the vehicle state. If the vehicle is in the downhill state, the gear and clutch control block executes to generate engine braking effect on the vehicle. Once the vehicle speed reaches zero, the controller shifts the gear position to neutral gear and shut down the AMT controller 203. If the vehicle is in stand still condition with gear engaged condition, and ignition switched is turned off, the state "Pre Shut down Block" 301 brings the gear position to neutral position and it will enter the shutdown mode.

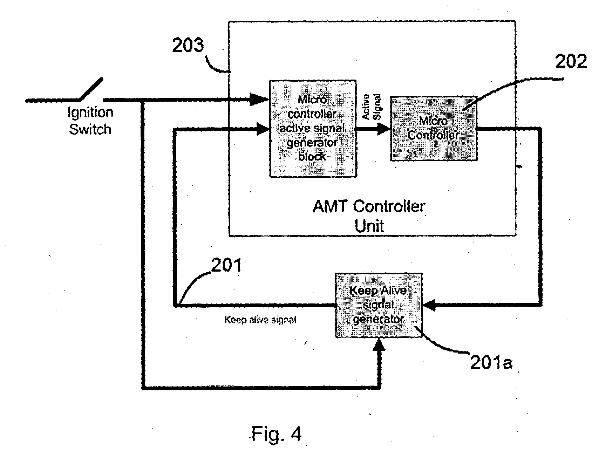

In the second embodiment of the present invention and referring to Figure 4, a keep-alive signal 201 is generated by a separate hardware unit 201 a which takes input from the micro controller 202 of the AMT control unit 203 and Ignition switched off. It generates the keep-alive signal 201 to execute the "Pre Shut down Block" 301 as mentioned above.

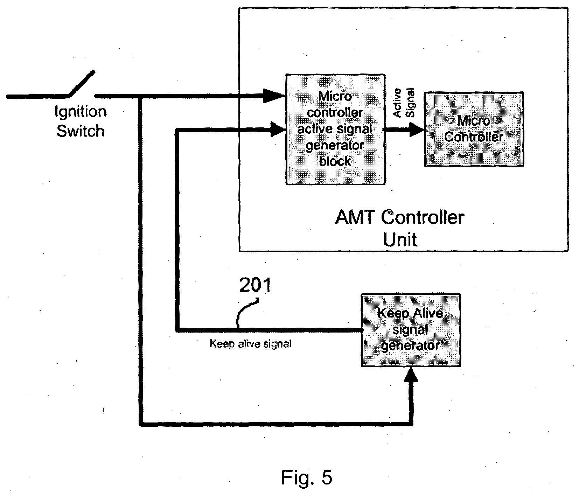

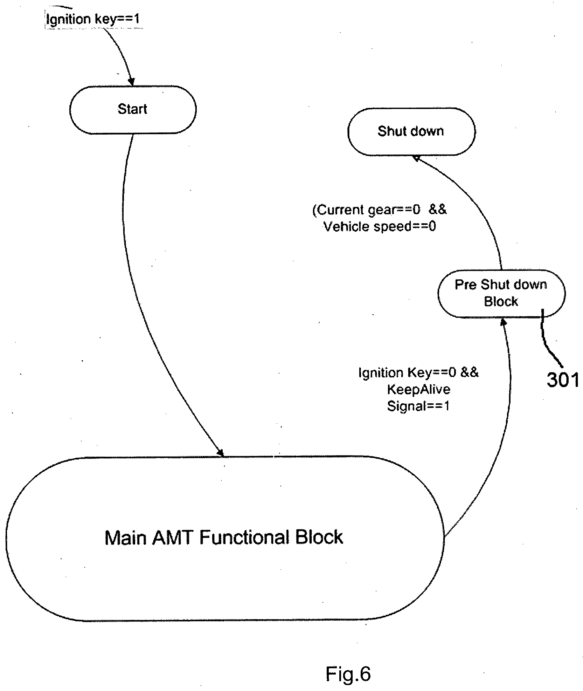

In the third embodiment of the present invention, and referring to Figure 5, a keep-alive signal 201 is generated by a separate hardware unit 201 a for a predefined duration once the ignition key is switched off. The state machine flow is shown in Figure 6. In previous embodiments the state machine is generating the keep-alive signal. It generates the keep-alive signal to execute the "Pre Shut down Block" as mentioned above.

## Claims

1. A vehicle controller for an automated manual transmission equipped engine, comprising a microcontroller (202) generating a keep alive signal (201) for controlled shut down mode; and a microcontroller active signal generator (204) receiving inputs from ignition switch and the microcontroller (202) generating the keep alive signal and thereby providing an active signal output to the microcontroller (202);
wherein the microcontroller (202) and micro controller active signal generator (204) is within an automated manual transmission controller unit (203); and
wherein the ignition when switched off and the keep alive signal (201) is high, the microcontroller enters a pre-shutdown state (301).

2. The vehicle controller for an automated manual transmission equipped engine as claimed in claim 1, wherein the pre-shutdown state (301) executes certain functions depending on the vehicle state.

3. The vehicle controller for an automated manual transmission equipped engine as claimed in claim 1, wherein the pre-shutdown state (301) executes engine braking effect on the vehicle, when the vehicle is in downhill state.

4. The vehicle controller for an automated manual transmission equipped engine as claimed in claim 1, wherein the pre-shutdown state (301) shifts the gear position to neutral gear and shuts down the automated manual transmission controller when the vehicle speed reached zero.

5. The vehicle controller for an automated manual transmission equipped engine as claimed in claim 1, wherein the pre-shutdown state (301) brings the gear position to neutral position and enters shutdown mode when vehicle is in stand still condition with gear engaged condition.

6. A vehicle controller for an automated manual transmission equipped engine, comprising a keep alive signal generator for generating a keep alive signal (201) for controlled shut down mode based on input from ignition switch and a microcontroller (202);
a microcontroller active signal generator (204) receiving inputs from the ignition switch and keep alive signal generator and thereby providing an active signal output to the microcontroller (202);
wherein the microcontroller (202) and micro controller active signal generator are within an automated manual transmission controller unit (203) and the keep alive signal generator is kept outside the automated manual transmission controller unit (203); and
wherein the ignition when switched off and the keep alive signal (201) is high, the microcontroller enters a pre-shutdown state (301).

7. A vehicle controller for an automated manual transmission equipped engine, comprising
a keep alive signal generator for generating a keep alive signal (201) for controlled shut down mode based on input from ignition switch;
a microcontroller active signal generator (204) receiving inputs from the ignition switch and keep alive signal generator and thereby providing an active signal output to the microcontroller (202);
wherein the microcontroller (202) and micro controller active signal generator is within an automated manual transmission controller unit and the keep alive signal generator is kept outside the automated manual transmission controller unit and
wherein the ignition when switched off and the keep alive signal (201) is high, the microcontroller enters a pre-shutdown state (301).

## Patentansprüche

1. Fahrzeugsteuerung für einen mit manueller Automatik-Gangschaltung ausgestatteten Motorantrieb, umfassend:
einen Mikrocontroller (202), der ein Keep-Alive-Signal (201) für einen gesteuerten Abschalt-Modus erzeugt, und
einen Mikrocontroller-Aktivitätssignalgenerator (204), dem Eingänge vom Zündschalter und dem Mikrocontroller (202), der das Keep-Alive-Signal erzeugt, und der damit eine Aktivitätssignalausgabe an den Mikrocontroller (202) liefert, zugeführt sind,
wobei der Mikrocontroller (202) und der Mikrocontroller-Aktivitätssignalgenerator (204) sich in einer Steuereinheit (203) der manuellen Automatik-Gangschaltung befindet, und
wobei im abgeschalteten Zustand der Zündung und bei gesetztem Keep-Alive-Signal (201) der Mikrocontroller in einen Vor-Abschalt-Zustand (301) übergeht.

2. Fahrzeugsteuerung für einen mit manueller Automatik-Gangschaltung ausgestatteten Motorantrieb nach Anspruch 1, wobei der Vor-Abschalt-Zustand (301) bestimmte Funktionen in Abhängigkeit von dem Fahrzeugzustand ausführt.

3. Fahrzeugsteuerung für einen mit manueller Automatik-Gangschaltung ausgestatteten Motorantrieb nach Anspruch 1, wobei der Vor-Abschalt-Zustand (301) eine Motor-Brems-Wirkung ausführt, wenn das Fahrzeug sich in abwärts geneigtem Zustand befindet.

4. Fahrzeugsteuerung für einen mit manueller Automatik-Gangschaltung ausgestatteten Motorantrieb nach Anspruch 1, wobei der Vor-Abschalt-Zustand (301) den Schaltzustand in den Leerlauf bringt und die Steuerung der manuellen Automatik-Gangschaltung hinunterfährt.

5. Fahrzeugsteuerung für einen mit manueller Automatik-Gangschaltung ausgestatteten Motorantrieb nach Anspruch 1, wobei der Vor-Abschalt-Zustand (301) den Schaltzustand in den Leerlauf bringt und in den Abschalt-Modus übergeht, wenn das Fahrzeug sich im Zustand des Stillstands bei einem Zustand mit eingelegtem Gang befindet.

6. Fahrzeugsteuerung für einen mit manueller Automatik-Gangschaltung ausgestatteten Motorantrieb, umfassend:
einen Keep-Alive-Signalgenerator zum Erzeugen eines Keep-Alive-Signals (201) für einen gesteuerten Abschalt-Modus aufgrund eines Eingangs vom Zündschalter und einem Mikrocontroller (202),
einen Mikrocontroller-Aktivitätssignalgenerator (204), dem Eingänge von dem Zündschalter und dem Keep-Alive-Signalgenerator zugeführt sind und der damit eine Aktivitätssignalausgabe an den Mikrocontroller (202) liefert,
wobei der Mikrocontroller (202) und der Mikrocontroller-Aktivitätssignalgenerator sich in einer Steuereinheit (203) der manuellen Automatik-Gangschaltung befinden und der Keep-Alive-Signalgenerator außerhalb der Steuereinheit (203) der manuellen Automatik-Gangschaltung gehalten ist, und
wobei im abgeschalteten Zustand der Zündung und bei gesetztem Keep-Alive-Signal (201) der Mikrocontroller in einen Vor-Abschalt-Zustand (301) übergeht.

7. Fahrzeugsteuerung für einen mit manueller Automatik-Gangschaltung ausgestatteten Motorantrieb, umfassend:
einen Keep-Alive-Signalgenerator zum Erzeugen eines Keep-Alive-Signals (201) für einen gesteuerten Abschalt-Modus aufgrund eines Eingangs vom Zündschalter,
einen Mikrocontroller-Aktivitätssignalgenerator (204), dem Eingänge von dem Zündschalter und dem Keep-Alive-Signalgenerator zugeführt sind und der damit eine Aktivitätssignalausgabe an den Mikrocontroller (202) liefert;
wobei der Mikrocontroller (202) und der Mikrocontroller-Aktivitätssignalgenerator sich in einer Steuereinheit der manuellen Automatik-Gangschaltung befindet und der Keep-Alive-Signalgenerator außerhalb der Steuereinheit der manuellen Automatik-Gangschaltung gehalten ist, und
wobei im abgeschalteten Zustand der Zündung und bei gesetztem Keep-Alive-Signal (201) der Mikrocontroller in einen Vor-Abschalt-Zustand (301) übergeht.

## Revendications

1. Contrôleur de véhicule pour un moteur équipé d'une transmission manuelle automatisée, comprenant
un microcontrôleur (202) générant un signal d'entretien (201) pour un mode d'arrêt contrôlé ; et
un générateur de signal actif de microcontrôleur (204) recevant des entrées provenant d'un commutateur d'allumage et le microcontrôleur (202) générant le signal d'entretien et, de ce fait, fournissant une sortie de signal actif au microcontrôleur (202) ;
le microcontrôleur (202) et le générateur de signal actif de microcontrôleur (204) se trouvant à l'intérieur d'une unité de contrôleur de transmission manuelle automatisée (203) ; et
lorsque l'allumage est éteint et le signal d'entretien (201) est haut, le microcontrôleur entre dans un état pré-arrêt (301).

2. Microcontrôleur de véhicule pour un moteur équipé d'une transmission manuelle automatisée selon la revendication 1, dans lequel l'état pré-arrêt (301) exécute certaines fonctions en fonction de l'état de véhicule.

3. Microcontrôleur de véhicule pour un moteur équipé d'une transmission manuelle automatisée selon la revendication 1, dans lequel l'état pré-arrêt (301) exécute un effet de frein moteur sur le véhicule lorsque le véhicule est dans un état en descente.

4. Microcontrôleur de véhicule pour un moteur équipé d'une transmission manuelle automatisée selon la revendication 1, dans lequel l'état pré-arrêt (301) commute la position de rapport au point mort et arrête le microcontrôleur de transmission manuelle automatisée lorsque la vitesse de véhicule atteint zéro.

5. Microcontrôleur de véhicule pour un moteur équipé d'une transmission manuelle automatisée selon la revendication 1, dans lequel l'état pré-arrêt (301) amène la position de rapport au point mort et entre dans un mode d'arrêt lorsque le véhicule se trouve dans une condition immobile avec une condition de rapport engagé.

6. Microcontrôleur de véhicule pour un moteur équipé d'une transmission manuelle automatisée, comprenant
un générateur de signal d'entretien pour générer un signal d'entretien (201) pour un mode d'arrêt contrôlé sur la base d'une entrée provenant d'un commutateur d'allumage et d'un microcontrôleur (202) ;
un générateur de signal actif de microcontrôleur (204) recevant des entrées provenant du commutateur d'allumage et du générateur de signal d'entretien et, de ce fait, fournissant une sortie de signal actif au microcontrôleur (202) ;
le microcontrôleur (202) et le générateur de signal actif de microcontrôleur se trouvant à l'intérieur d'une unité de microcontrôleur de transmission manuelle automatisée (203), et le générateur de signal d'entretien étant maintenu à l'extérieur de l'unité de microcontrôleur de transmission manuelle automatisée (203) ; et
lorsque l'allumage est éteint et le signal d'entretien (201) est haut, le microcontrôleur entre dans un état pré-arrêt (301).

7. Microcontrôleur de véhicule pour un moteur équipé d'une transmission manuelle automatisée, comprenant
un générateur de signal d'entretien pour générer un signal d'entretien (201) pour un mode d'arrêt contrôlé sur la base d'une entrée provenant d'un commutateur d'allumage ;
un générateur de signal actif de microcontrôleur (204) recevant des entrées provenant du commutateur d'allumage et du générateur de signal d'entretien et, de ce fait, fournissant une sortie de signal actif au microcontrôleur (202) ;
le microcontrôleur (202) et le générateur de signal actif de microcontrôleur se trouvant à l'intérieur d'une unité de microcontrôleur de transmission manuelle automatisée, et le générateur de signal d'entretien étant maintenu à l'extérieur de l'unité de microcontrôleur de transmission manuelle automatisée ; et
lorsque l'allumage est éteint et le signal d'entretien (201) est haut, le microcontrôleur entre dans un état pré-arrêt (301).
